# EUROPEAN PATENT APPLICATION

(11) **EP 2 590 443 A1**
(43) Date of publication of application: **08.05.2013**
(21) Application number: 10854069.1
(22) Date of filing: 29.06.2010
(51) Int. Cl.: H04W 28/10, H04W 24/00, H04W 52/02

(54) **CONTROL DEVICE AND METHOD, AND NODE DEVICE**

(71) Applicant: Fujitsu Limited, Kawasaki-shi, Kanagawa 211-8588 (JP)
(72) Inventor: SHINADA, Yuki, Kawasaki-shi Kanagawa 211-8588 (JP); KOBAYASHI, Kazunari, Kawasaki-shi Kanagawa 211-8588 (JP); KAWAI, Hiromitsu, Kawasaki-shi Kanagawa 211-8588 (JP); NITTA, Daisuke, Kawasaki-shi Kanagawa 211-8588 (JP)
(74) Representative: Ward, James Norman
(86) International application number: PCT/JP2010/061058
(87) International publication number: WO 2012/001772

(57) **Abstract**

A control apparatus (400) controlling an operation state of functions (104) which are included in the node apparatus (100, 200) connected to a network. The control apparatus (400) includes a forecasting part (434) which forecasts a maximum traffic amount (Tmax) in a target term in the node apparatus, and a control part (441, 442) which controls the operation state of the node apparatus to stop functions, other than a function which is demanded to process the maximum traffic amount, in the target term.

## Description

### TECHNICAL FIELD

The present invention discussed herein is related to technology fields of a node apparatus in a communication system such as a mobile communication system, and a control apparatus and control method for controlling the node apparatus.

### BACKGROUND ART

In response to a development of a recent mobile communication system, the traffic amount for a user using a network tends to be increased. A throughput capability exceeding a forecasted maximum traffic amount is demanded for a node apparatus such as a base station, a control station, or the like, which conducts a communication process in the mobile communication system. Accordingly, depending on an increase of the traffic amount, it is demanded to increase a number of operating node apparatuses. In addition, the node apparatuses are demanded to be always powered on from their beginning date, and all facilities being mounted are demanded to always operate.

Recently, as one of correspondences for environmental concerns, power saving is demanded in each industry. It is considered as the best means to stop operations of excessive node apparatuses to which operations are not demanded for a preferable traffic amount. However, it is not easy to stop an operation of the node apparatus since there is the above described operational request.

In order to realize the power saving of the node apparatus, for example, it is considered to apply a power saving device at a design stage, or to reduce the number of operating apparatuses by improving a throughput capability of each apparatus. Also, in related-art documents below, a method is described in which when an output exceeds a threshold, the output is stopped with respect to the base station under control of the control station. Another method is described in which in a network including multiple switching devices, traffic is monitored for each path, and a path having the least traffic is controlled not to be use.

### RELATED-ART DOCUMENT

### PATENT DOCUMENT

Patent Document 1: Japanese Laid-open Patent Publication No. H10-145842
Patent Document 2: Japanese Laid-open Patent Publication No. 2001-119730

### DISCLOSURE OF THE INVENTION

### PROBLEM TO BE SOLVED BY THE INVENTION

As described above, in light of features of device operations, it is difficult to stop operations of the excessive node apparatuses, and to save power of the devices. Hence, in response to a time period, and other conditions, the traffic amount in the network is greatly increased. On the other hand, the power consumption amount in the entire node apparatuses forming the network is not greatly changed.

The present invention is made in consideration of the above-described problems, and it is an object of the present invention to provide a node apparatus, and a control apparatus and method for controlling the node apparatus, in which power saving is realized by controlling an operation state of the node apparatus in response to transition of the traffic amount.

### MEANS OF SOLVING THE PROBLEM

According to one aspect of the invention, a control apparatus for controlling an operation state of functions which are included in a node apparatus connected to a network, the control apparatus including a forecasting part which forecasts a maximum traffic amount in a target term in the node apparatus; and a control part which controls the operation state of the node apparatus to stop functions, other than a function which is demanded to process the maximum traffic amount, in the target term.

A disclosed control method includes a forecasting step and a controlling step. In the forecasting step, an operation is performed similar to that conducted by the above described forecasting part. In the control step, an operation is performed similar to that conducted by the above described controlling part.

A disclosed node apparatus includes a forecasting part and a control part similar to those of the above described control apparatus.

### EFFECTS OF THE INVENTION

In accordance with the above described configuration, depending on a forecasted maximum traffic amount, it is possible to stop operations of excessive functions in a case of performing processing of the traffic in the node apparatus. By these configurations, it is possible to realize a great power consumption effect.

### BRIEF DESCRIPTION OF THE DRAWINGS

FIG. 1A and FIG. 1B are diagrams illustrating general configurations of mobile communication systems;
FIG. 2A and FIG. 2B are diagrams illustrating configuration examples of the mobile communication system to which an operation control apparatus is applied;
FIG. 3A and FIG. 3B are diagrams illustrating configuration examples of the mobile communication system to which the operation control apparatus is applied;
FIG. 4 is a block diagram illustrating a configuration of the operation control apparatus;
FIG. 5 is a block diagram illustrating a configuration of a base station or a control station being a target of an operation control;
FIG. 6 is a sequence diagram illustrating a flow of an operation when the operation control is performed;
FIG. 7A and FIG. 7B are tables illustrating examples of collected traffic information;
FIGS 8 is graph illustrating an example of an approximated curve of a traffic amount created based on the collected traffic information;
FIG. 9 is a graph illustrating an example of a traffic forecasting model;
FIG. 10 is a flowchart illustrating a flow of an operation pertinent to a determination of a maximum traffic amount Tmax;
FIG. 11 is a flowchart illustrating a flow of an operation pertinent to an instruction of an operation control;
FIG. 12 is a flowchart illustrating a flow of an operation pertinent to an update of the traffic forecasting model;
FIG. 13A and FIG. 13B are tables illustrating examples of the maximum traffic amount for each function;
FIG. 14A and FIG. 14B are tables illustrating a relationship between an operating facility rate for each operating facility and an actual operation number;
FIG. 15A and FIG. 15B are graphs illustrating transitions of power consumption and the operating facility number by the operation control based on the traffic amount;
FIG. 16A and FIG. 16B are diagrams illustrating aspects of operation controls based on the traffic amount of the operating facilities of the base station and the control station;
FIG. 17 is a flowchart illustrating a flow of an operation pertinent to the operation control flow of an increase of the traffic amount during the operation control;
FIG. 18A and FIG. 18B are graphs illustrating examples of a trigger curve g(x); and
FIG. 19A and FIG. 19B are graphs illustrating examples of the trigger curve g(x);

### BEST MODE FOR CARRYING OUT THE INVENTION

In the following, an embodiment of the present invention is described.

### (1) Regarding Mobile Communication System

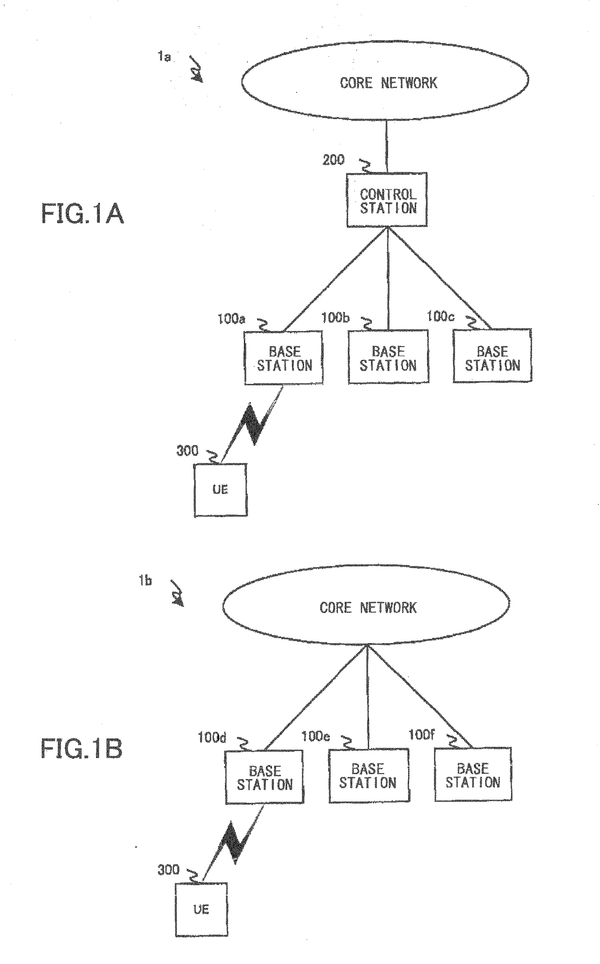

Referring to FIG. 1A and FIG. 1B, a configuration of the mobile communication system, in which an example of a control apparatus being disclosed is applied, is illustrated. FIG. 1A and FIG. 1B are block diagrams illustrating configurations of the mobile communication system. FIG. 1A is a block diagram of a mobile communication system 1a applying a communication system which is called a 3G (the third generation) method. As illustrated in FIG. 1A, the mobile communication system 1a has a configuration in which multiple base stations 100a through 100c are connected to a core network via a control station 200. The core network is regarded as a network possessed by a carrier of a cellular system, and includes functions to realize a connection control such as a management of contract information of a user equipment (UE) 300, a call process and a movement management of the UE 300, and the like. The base stations 100a through 100c form cells corresponding to radio transmission zones under them, accommodate the UEs 300 present in the cells, and communicate with the UEs 300. For example, in the example in FIG. 1A, the UE 300 is accommodated in the cell of the base station 100a, and receives service data transmitted from a data server, or the like in the core network through the base station 100a.

FIG. 1B is a block diagram of a mobile communication system 1b which applies to a communication method which is referred to as a LTE (Long Term Evolution), so-called "3.9G". As illustrated in FIG. 1B, the mobile communication system 1b has a configuration in which multiple base station 100d through 100f are connected to a MME (Mobility Management Entity which is not illustrated) corresponding to an upper node in the core network, instead of via a control station. Similarly, the base stations 100d through 100f form cells corresponding to radio transmission zones under them, and communicate with the UEs 300 present in the cells.

The node apparatuses are targets of an operation control by an operation control 400, which will be described later, as an example of the control apparatus being disclosed, and is based on a concept including a general node arranged in the network such as the above described mobile communication systems 1a and 1b. For example, the node apparatuses may include so-called "edge nodes" arranged at edges of the network such as the base station 100a through 100c and base station 100d through 100f, and so-called "relay nodes" such as the control station 200 arranged at borders or entries of the network. Regardless of the base stations 100a through 100f, for example, in a case of describing an example of the node apparatus, the node apparatus is described as the base station 100. In the following, as a specific example, the node apparatuses will be described as the base station 100 and the control station 200.

In the following, the mobile communication system 1a or 1b will be illustrated and described. Also, the operation control apparatus 400, which will be described later, may be applied with respect to any communication system other than a mobile communication system.

### (2) Configuration Example

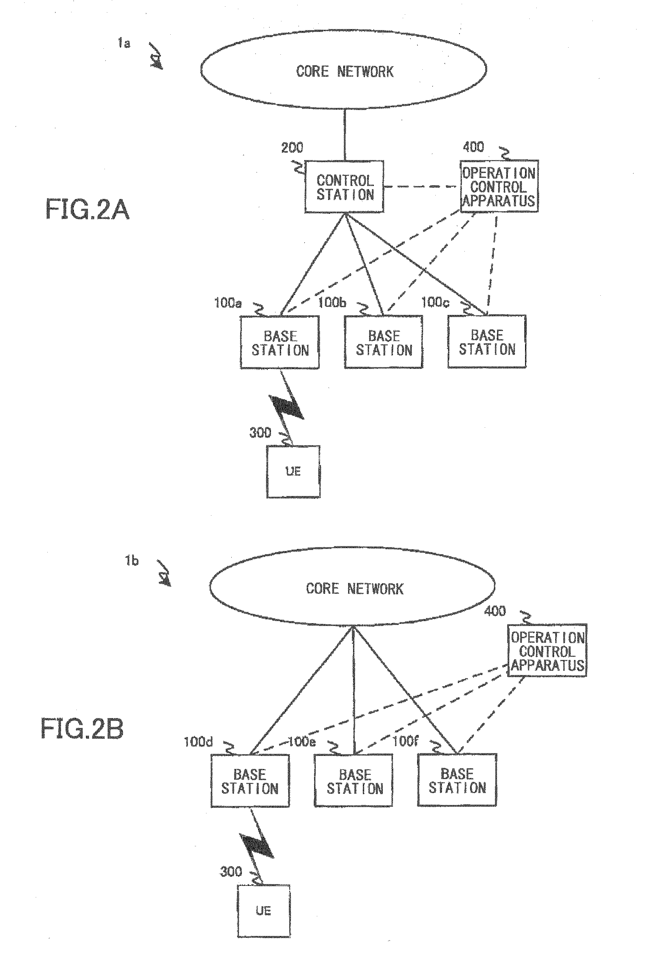

One aspect of an application of an example of the disclosed control 1 apparatus for the mobile communication system will be described with reference to FIG. 2A and FIG. 2B. FIG. 2A is a block diagram illustrating a configuration of the mobile communication system 1a including the control station 200 typified by the 3G method. The operation control apparatus 400 regarded as the specific example of the disclosed control apparatus is a separate apparatus which is connected to each of the base stations 100a through 100c and the control station 200 which are the specific examples of the node apparatuses. The operation control apparatus 400 is connected to be capable of acquiring traffic information collected at each of the base stations 100a through 100c and the control station 200, and of instructing each of the base stations 100a through 100c and the control station 200 for the operation control. As illustrated in FIG. 2A, in the mobile communication system 1a in which one control station 200 accommodates the multiple base stations 100 under the control station 200, the operation control apparatus 400 may be connected to the control station 200 and may not be connected to the multiple base stations 100. In this case, the operation control apparatus 400 preferably makes instructions for collecting the traffic information at each of the base stations 100a through 100c and the operation control through the control station 200.

On the other hand, in the mobile communication system 1b af the LTE method illustrated in FIG. 2B, the operation control apparatus 400 may be a separate apparatus which is connected to each of the base stations 100d through 100f as the specific examples of the node apparatuses. In this case, similarly, the operation control apparatus 400 is connected to be capable of acquiring the traffic information collected at each of the base station 100d through 100f, and of instructing the operation control with respect to the base stations 100d and 100f.

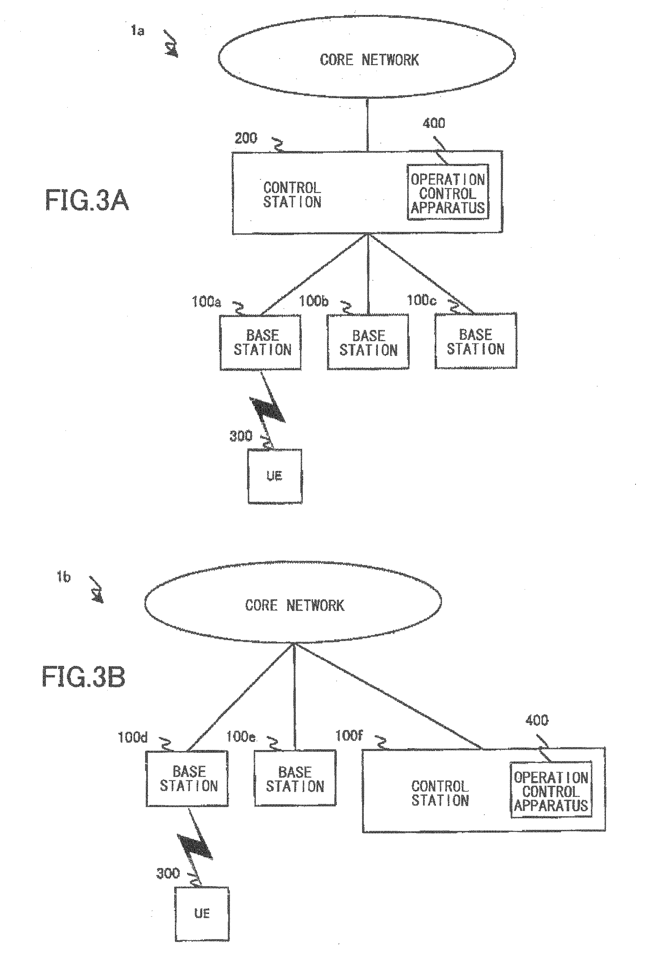

Also, the operation control apparatus 400 may be a part of an apparatus configuration embedded in one of the node apparatuses. In the example illustrated in FIG. 3A, the operation control apparatus 400 is a part of a configuration member of the control station 200 in the mobile communication system 1a of the 3G method. Also, in the example illustrated in FIG. 3B, the operation control apparatus 400 is a part of a configuration member of the base station 100f of the LTE method. As described above, if the operation control apparatus 400 takes over the configuration capable of acquiring the traffic information collected at each of the base station 100 and the control station 200, and of instructing the operation control with respect to the base station 100 and the control station 200, the operation control apparatus 400 may be formed as a portion of an other apparatus in this manner. Also, as long as the above described connection configuration is taken over, the operation control apparatus 400 may be applied to a mobile communication system using another communication method other than the above described methods, and may be installed in a configuration other than the above described configurations. For example, in the mobile communication system 1b of the LTE method, the operation control apparatus 400 may be arranged in the MME being the upper node in the core network. Alternatively, the operation control apparatus 400 has a configuration of a separate apparatus connected to the core network.

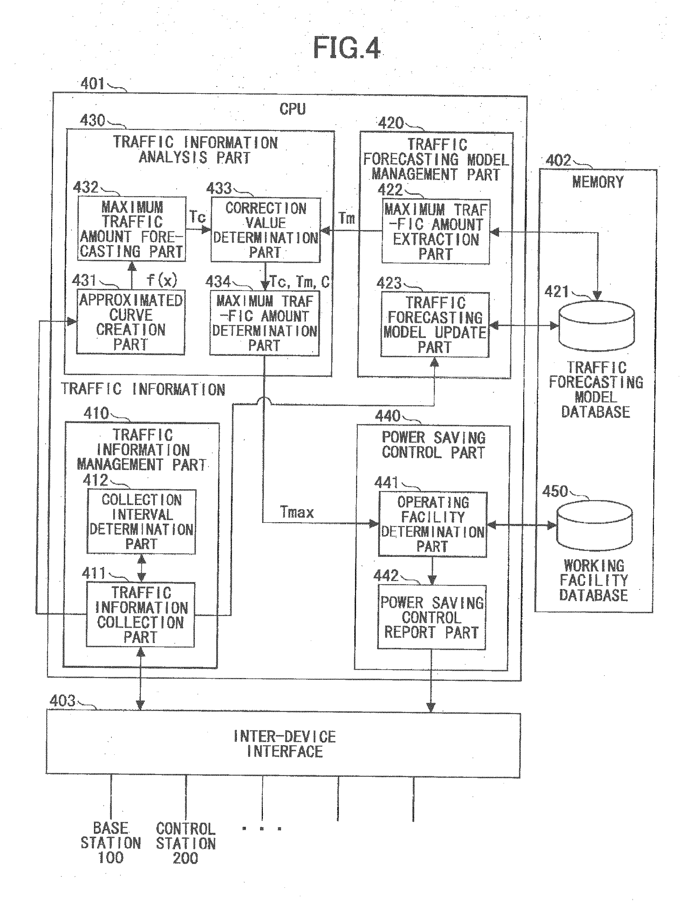

Referring to FIG. 4, a configuration of the operation control apparatus 400 will be described. FIG. 4 is a block diagram illustrating a configuration included in the operation control apparatus 400 and expediential functional parts corresponding to functions included in each part.

The operation control apparatus 400 includes a CPU 401, a memory 402, and an inter-device interface 403.

The CPU 401 is regarded as a control part for controlling an operation of the entire operation control apparatus 400, and includes a traffic information management part 410, a traffic forecasting model management part 420, a traffic information analysis part 430, and a power saving control part 440 as functional parts for performing the operation control.

The memory 402 is a memory for storing data, and for example, stores a program causing the CPU 401 to operate. The CPU 401 reads out the program, and controls each of parts. In the memory 402, a traffic forecasting model database 421 and a working facility database 450 are stored.

The inter-device interface 403 is an interface for connecting the operation control apparatus 400 to the base station 100 or the control station 200 which is the target of the operation control.

The traffic information management part 410 is regarded as a functional part for acquiring and managing the traffic information, and includes a traffic information collection part 411 and a collection interval determination part 412.

The traffic information collection part 411 makes a sending request of the traffic information to the base station 100 and the control station 200 which are targets of the operation control, and collects the sent traffic information. For a request of the traffic information, there are two types of requests: a request of the traffic information at a requested time, and a request of the traffic information at collection intervals determined by the collection interval determination part 412.

The collection interval determination part 412 determines the collection interval of the traffic information for a traffic information analysis from the traffic information at time the sending request is made at the traffic information collection part 411. The collection interval determination part 412 inputs the determined collection interval to the traffic information collection part 411.

The traffic forecasting model management part 420 corresponds to a functional part for creating a traffic forecasting model based on a measured value of previous traffic information which is an example of a second predetermined term, and for extracting a maximum traffic amount Tm as an example of a second forecasted value in the embodiment. Accordingly, when the traffic forecasting model management part 420 accesses the traffic forecasting model database 421, and also includes a maximum traffic amount extraction part 422, and a traffic forecasting model update part 423.

The traffic forecasting model database 421 is a database to store the traffic information collected by the traffic information management part 410. The traffic forecasting model database 421 accumulates the collected traffic information for each of conditions such as weather, day, time period, and the like, and creates the traffic forecasting model for each of the conditions. For the condition at time of acquiring the traffic information to create the traffic forecasting model, another condition other than the above described conditions may be added. For example, it may be considered that in a case in which the number of users is extemporaneously increased in an area managed by each of the base station 100 and the control station 200 which are the targets due to some kind of an event, time of holding the event may be added as the condition.

The maximum traffic amount extraction part 422 refers to the traffic forecasting model for each of the conditions created by the traffic forecasting model database 421, and extracts the maximum traffic amount Tm in a term (that is, a forecast target term in the future) to be a target of a traffic forecast. The maximum traffic amount extraction part 422 inputs the extracted maximum traffic amount Tm to a correction value determination part 433 of the traffic information analysis part 430.

The traffic forecasting model update part 423 accepts an input of the traffic information, collected by the traffic information management part 410 and updates the maximum traffic amount extraction, part 422 in response to newly input traffic information.

The traffic information analysis part 430 forecasts the maximum traffic amount from the acquired traffic information, and also includes a function which determines the maximum traffic amount being forecasted in the future by comparing the forecasted maximum traffic amount with the maximum traffic amount Tm extracted from the traffic forecasting model which is created based on the measured value of past traffic information (that is, the traffic forecasting model database 421). Hence, the traffic information analysis part 430 includes an approximated curve creation part 431, a maximum traffic amount forecasting part 432, a correction value determination part 433, and a maximum traffic amount determination part 434.

The approximated curve creation part 431 accepts an input of the traffic information collected by the traffic information management part 410, and calculates a transition of a forecasted value of the traffic amount in the forecast target term, for example, by creating an approximated curve or the like. The approximated curve creation part 431 inputs the created approximated curve f(x) to the maximum traffic amount forecasting part 432.

The maximum traffic amount forecasting part 432 refers to the transition of the forecasted value of the traffic amount calculated by the approximated curve creation part 431, and calculates the maximum traffic amount Tc in the forecast target term. The maximum traffic amount Tc may be an example of a first forecasted value in the embodiment, and typically, is calculated based on the measured value of the traffic amount in a predetermined term immediately before the forecast target term which is an example of a first predetermined term.

The correction value determination part 433 determines a correction value C of the maximum traffic amount in the forecast target term by comparing the maximum traffic amount Tc forecasted from the approximated curve f(x) with the maximum traffic amount Tm extracted from the traffic forecasting model by the maximum traffic amount extraction part 422. The correction value determination part 433 inputs the correction value C of the determined maximum traffic amount to the maximum traffic amount determination part 434.

The maximum traffic amount determination part 434 determines the maximum traffic amount Tmax in the forecast target term based on the maximum traffic amount Tc forecasted from the approximated curve f(x), the maximum traffic amount Tm extracted from the traffic forecasting model, and the correction value C. The maximum traffic amount determination part 434 inputs the determined maximum traffic amount Tmax to an operating facility determination part 441. Specific configurations for determining the correction value C and the maximum traffic amount Tmax will be described later.

The power saving control part 440 refers to a working facility database 450, and sends to the base station 100 or the control station 200 an instruction for operating a facility demanded to process the maximum traffic amount Tmax calculated by the traffic information analysis part 430. Accordingly, the power saving control part 440 includes the operating facility determination part 441, and a power saving control report part 442.

The operating facility determination part 441 calculates an operating facility number favorable for the base station 100 or the control stations 200 which is the target of the operation control, based on the maximum traffic amount Tmax in the forecast target term which is determined by the traffic information analysis part 430. Specifically, the operating facility determination part 441 refers to the operating facility number in the base station 100 or the control station 200 which is the target of the operation control, the operating facility number stored in the working facility database 450. The operating facility determination part 441 considers a process amount, power consumption, and the like for each of the operating facilities, and determines the operating facility number.

The power saving control report part 442 conducts an instruction of the operation control by individually reporting the operating facility number determined by the operating facility determination part 441 to the base station 100 or the control station 200 which is the target of the operation control through the inter-device interface 403.

The working facility database 450 is a database for storing information of the operating facilities possessed by the base station 100 or the control station 200 which is the target of the operation control. The working facility database 450 stores information of the process amount, the power consumption, and the like, for example, regarding an operation number of hardware such as a network communication card in the base station 100 or the control station 200 which is the target of the operation control, a number of cells generated under the base station 100, or the like.

Each of functional parts is not limited to the expediential functional part in the CPU 401 or the memory 402. For example, each of functional parts may be a program described in software, or may be an entity such as an independent CPU.

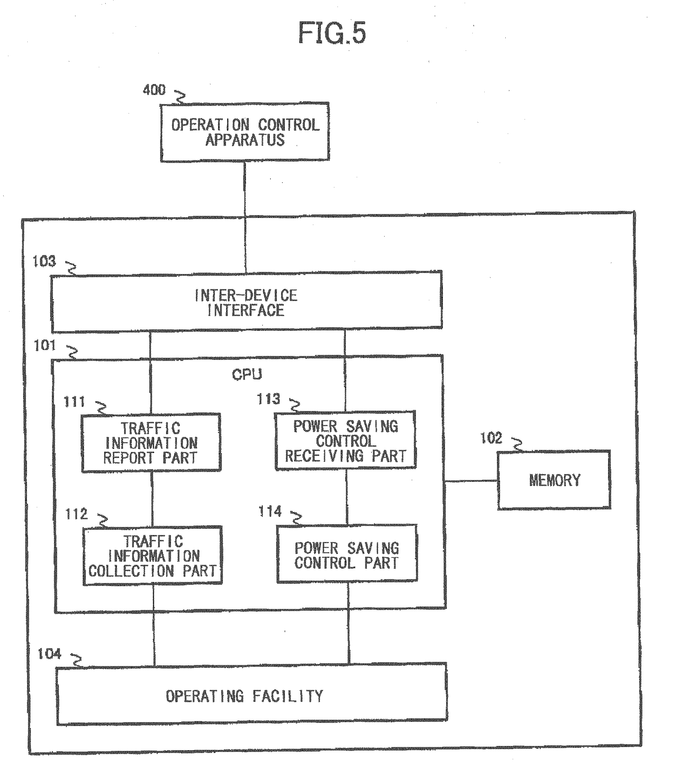

Referring to FIG. 5, a configuration of the base station 100 or the control station 200, which is the target of the operation control for the operation control apparatus 400, will be described. FIG. 5 is a block diagram illustrating a configuration included in common in the base station 100 or the control station 200, and expediential functional parts corresponding to functions included in each part. Regarding parts which are not particularly referred to, the base station 100 or the control station 200, which will be described below, may include the same configuration as that of well-known base stations or a well-known control station.

Each of the base station 100 and the control station 200 includes a CPU 101, a memory 102, an inter-device interface 103, and the operating facility 104.

The CPU 101 is regarded as a control part for controlling an operation of each of the entire base stations 100 or control station 200, and sends and receives signals for the operation control to/from each part. The CPU 101 includes a traffic information report part 111, a traffic information collection part 112, a power saving control receiving part 113, and a power saving control part 114. The traffic information report part 111 reports the traffic information collected by the traffic information collection part 112 to the operation control apparatus 400 through the inter-device interface 103. The traffic information collection part 112 collects the traffic information in itself, and sends the collected traffic information to the traffic information report part 111. The power saving control receiving part 113 receives an instruction of the operation control including the operating facility number reported from the operation control apparatus 400, and sends the instruction to the power saving control part 114. The power saving control part 114 makes an instruction of the operation or the stop for each facility in the operating facility 104 in response to the operating facility number included in the received instruction of the operation control. Each of functional parts is not limited to the expediential functional part in the CPU 101, and for example, may be a program described in software or may be an entity such as an independent CPU.

The memory 102 is a memory to store data, and for example, stores the program for causing the CPU 101 to operate. The CPU 101 may read out the program and may conduct a process corresponding to each functional part and a control for each part.

The inter-device interface 103 is an interface for a connection between the base stations 100 or the control station 200 which is the targets of the operation control and the operation control apparatus 400.

The operating facility 104 includes hardware such as the network communication card for performing the communication process in the base stations 100 or the control station 200. The operating facility 104 includes multiple operating facilities such as multiple communication cards or chips, and realizes the operation or the stop for each of the multiple operating facilities in response to the instruction of the power saving control part 114.

### (3) Operation Example

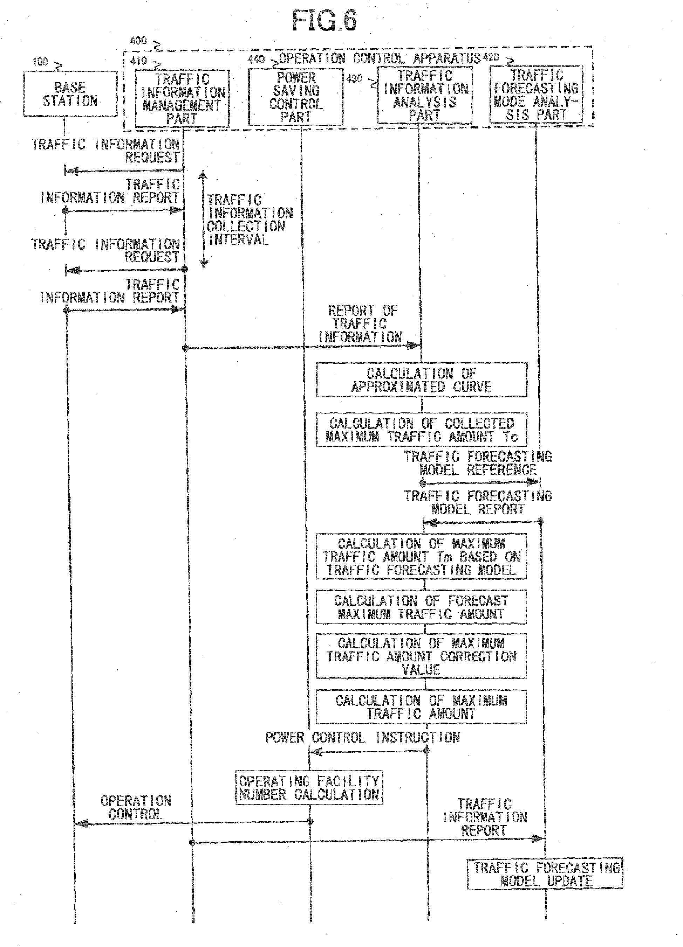

Referring to FIG. 6, an operation of the operation control apparatus 400 will be described. FIG. 6 is a sequence diagram illustrating a flow of a process conducted by the operation control apparatus 400.

As illustrated in FIG. 6, the traffic information management part 410 of the operation control apparatus 400 conducts a request of the traffic information with respect to the base stations 100 at the collection intervals determined by the collection interval determination part 412. The traffic information report part 111 of the base station 100 which receives the request of the traffic information sends the traffic information collected by the traffic information collection part 112 to the operation control apparatus 400. After that, the traffic information management part 410 sends the collected traffic information to the traffic information analysis part 430.

The collection interval of the traffic information is preferably determined depending on the condition, for example, from an interval of approximately one minute to one hour. In a case of setting the collection interval to be shorter, it is possible to collect detailed traffic information, and to expect improvement of a forecasting accuracy of the traffic amount. On the other hand, it is easily influenced from a burst transition such as an extemporaneous increase or decrease. In this case, thus, accuracy may be degraded. By setting the collection interval to be longer, it may not be easily influenced. However, the traffic information to be collected is averaged, and forecasting accuracy is degraded more than the case in which the collection interval is shorter.

For example, it is preferable to apply, for example, an absolute value of a call number as the condition to determine the collection interval. Since it is possible to ignore the influence to a forecast depending on quantity of traffic increase or decrease when the call number is larger, the accuracy is not easily influenced from the burst transition. Therefore, it is possible to improve the accuracy of the traffic forecast by setting the collection interval to be shorter when the call number is larger. On the contrary, when the call number is smaller, the traffic forecast is easily influenced from the burst transition. By setting the collection interval to be longer, it is possible to absorb the influence of the burst transition.

Sampling data (that is, the collected traffic information) of the traffic information is used to forecast the traffic amount in the forecast target term. Thus, it is preferable to approximately determine the sampling number depending on a solving method of an approximated polynominal used to calculate the approximated curve f(x) which will be described later.

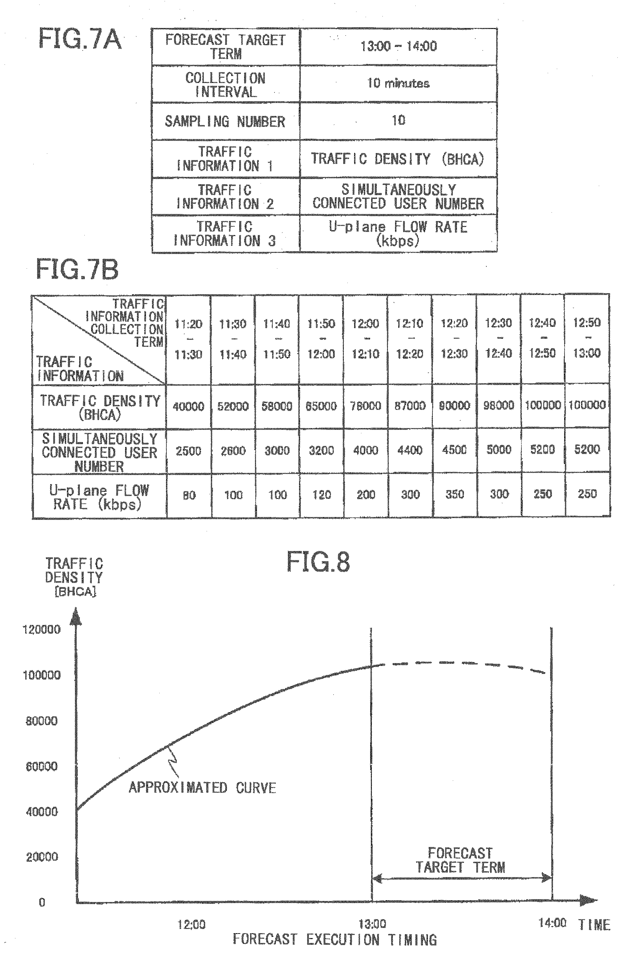

FIG. 7A and FIG. 7B illustrate examples of the traffic information to be collected. FIG. 7A illustrates an example of information included in a request of the traffic information. A request message includes the forecast target term being targeted to forecast the traffic amount, the collection interval of the traffic information, the sampling number, a type of the traffic information to be collected, and the like, to report to the base stations 100. In the example in FIG. 7A, the forecast target term indicates 13:00 - 14:00, and the collection interval is set to be 10 minutes. Also, the sampling number of the traffic information is set to be 10. A total amount (Busy Hour Call Attempts (BHCA)) of calling count as an index indicating the call number, a simultaneous connection user number, and a U-plane flow amount are set in the traffic information to be collected.

FIG. 7B illustrates an example of the traffic information to collect in response to a traffic information request. The traffic information report part 111 of each of the base stations 100 collects information of the call number, the simultaneous connection user number, and the U-plan flow amount, respectively, and sends the respective information to the operation control apparatus 400.

In the example of the traffic information illustrated in FIG. 7B, the traffic information is measured in which the call number "40000", the simultaneous connection user number "25000", and the U-plane flow amount "80"kbps. In a term of 12:30 - 11:40, the traffic information is measured in which the call number "52000", the simultaneous connection user number "2600", and the U-plane flow amount "100"kbps. In a term of 11:40 - 11:50, the traffic information is measured in which the call number "58000", the simultaneous connection user number "3000", and the U-plane flow amount "100"kbps. In a term of 11:50 - 12:00, the traffic information is measured in which the call number "65000", the simultaneous connection user number "3200", and the U-plane flow amount "120"kbps. In a term of 12:00 - 12:10, the traffic information is measured in which the call number "78000", the simultaneous connection user number "4000", and the U-plane flow amount "200"kbps. In a term of 12:10 - 12:20, the traffic information is measured in which the call number "87000", the simultaneous connection user number "4400", and the U-plane flow amount "300"kbps.

In a term of 12:20 - 12:30, the traffic information is measured in which the call number "90000", the simultaneous connection user number "4500", and the U-plane flow amount "350"kbps. In a term of 12:30 - 12:40, the traffic information is measured in which the call number "98000", the simultaneous connection user number "5000", and the U-plane flow amount "300"kbps. In a term of 12:40 - 12:50, the traffic information is measured in which the call number "100000", the simultaneous connection user number "5200", and the U-plane flow amount "250"kbps. In a term of 12:50 - 13:00, the traffic information is measured in which the call number "100000", the simultaneous connection user number "5200", and the U-plane flow amount "250"kbps.

The approximated curve creation part 431 of the traffic information analysis part 430 creates the approximated curve f(x) indicating the transition of the traffic amount by using the received traffic information. Specifically, the approximated curve creation part 431 creates the approximated curve f(x) by using an approximation method using the approximate polynominal with respect to the collected traffic information. As the approximation method, for example, a method such as a least-squares method, Akaike's Information Criterion (AIC), or the like may be applied.

The approximated curve creation part 431 also forecasts the transition of the traffic amount in the forecast target term by creating the approximated curve f(x) from the collected traffic information. Specifically, by extending the approximated curve f(x) created as described above after a current forecast execution timing, the transition of the traffic amount is forecasted in the forecast target term in the future.

FIG. 8 illustrates the approximated curve f(x) calculated by the least-squares method for the call number (BHCA) in the traffic information illustrated in FIG. 7B. In FIG. 8, the forecast execution timing to create the approximated curve f(x) is set to be 13:00. In the approximated curve f(x), a solid line portion indicates an approximate value based on the collected traffic information, and a dashed line portion indicates a forecasted value of the call number in the forecast target term 13:00 - 14:00 calculated by the approximated curve f(x).

The maximum traffic amount forecasting part 432 calculates the maximum value Tc=max f(x) of the traffic amount in the forecast target term by referring to the calculated approximated curve f(x). In the example illustrated in FIG. 8, in the approximated curve f(x) based on the collected traffic information, the traffic amount tends to be increased. The maximum value in the forecast target term appears. It is forecasted that the traffic amount is transited to be a decreased tendency after that. By calculating based on the approximate polynominal, for example, the maximum traffic amount forecasting part 432 forecasts 104896 as the call number and the maximum value Tc of the traffic amounts.

Next, the correction value determination part 433 of the traffic information analysis part 430 reports a reference request of the traffic forecasting model to the traffic forecasting model management part 420. When receiving the reference request of the traffic forecasting model, the traffic forecasting model management part 420 instructs the maximum traffic amount extraction part 422 to extract the maximum traffic amount Tm in the forecast target term from the traffic forecasting model. The maximum traffic amount extraction part 422 collects the traffic information having the same condition as the forecast target term from the traffic information stored in the traffic forecasting model database 421, and creates the traffic forecasting model for each condition.

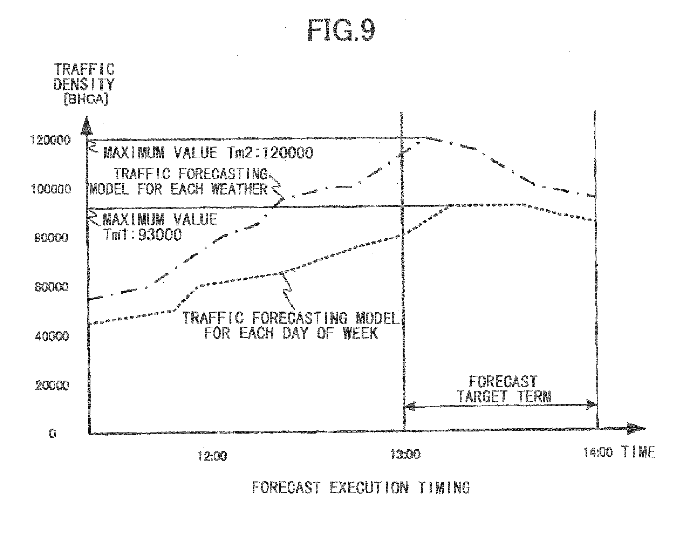

FIG. 9 illustrates an example of the traffic forecasting model depicted by a graph. In the example of FIG. 9, a traffic forecasting model for each day of the week (a dashed line portion) and a traffic forecasting model for each weather are illustrated (a dashed dot line portion). The traffic forecasting model for each day of the week is the traffic information of a time period coinciding the forecast target term and the day of the week. The traffic forecasting model for each weather is the traffic information of a time period coinciding the forecast target term and the day of the week. The maximum traffic amount extraction part 422 extracts the maximum traffic amount Tm in the forecast target term for each condition from the created traffic forecasting model. In the example of FIG. 9, the maximum traffic amount extraction part 422 extracts a value of 93000 as the maximum traffic amount Tm1 from the traffic forecasting model for each day of the week, and extracts a value of 120000 as the maximum traffic amount Tm2 from the traffic forecasting model for each weather. The condition and the number of the traffic forecasting models to be created may be approximately changed depending on the forecast target term and types of the base stations 100 or the control station 200 which are forecast targets. The maximum traffic extraction part 422 reports the maximum traffic amounts Tm1 and Tm2 being extracted, with each of the traffic forecasting models being created, with respect to the traffic information analysis part 430.

The correction value determination part 433 of the traffic information analysis part 430 calculates the correction value C with respect to the maximum traffic amount Tc based on the maximum traffic amounts Tm1 and Tm2 being extracted, and the maximum traffic amount Tc being collected. The correction value C is a value to calculate the maximum traffic amount Tmax which may occur in the forecast target term by applying to a maximum value in the maximum traffic amounts Tc, Tm1, and Tm2 which are acquired.

For example, the correction value C is calculated based on a difference between the maximum value and a minimum value in the maximum traffic amounts Tc, Tm1, and Tm2 which are acquired. For example, in a case of Tc = 104896, Tm1 = 93000, and Tm2 = 120000, the correction value C = 27000 is acquired based on the difference between Tm2 and Tm1.

The maximum traffic amount Tc is forecasted from the transition of the traffic amount immediately before the forecast target term. The maximum traffic amounts Tm1 and Tm2 are extracted from the traffic forecasting model. The smaller a difference between the maximum traffic amount Tc and the maximum traffic amounts Tm1 and Tm2 is, the higher accuracy of the maximum traffic amount Tc being forecasted is. On the other hand, the larger the difference is, the lower the accuracy is. It is considered that an actual traffic amount may fluctuate. Accordingly, in a case in which the difference is smaller, it is preferable that the correction value C to apply is small. Also, it is preferable that the greater the difference, the greater the correction value C is.

A maximum traffic determination part 343 determines the maximum traffic amount Tmax=147000 by a value acquired by adding the correction value C to the maximum value in the maximum traffic amounts Tc, Tm1, and Tm2 which are acquired. The traffic information analysis part 430 reports the determined maximum traffic amount Tmax to the power saving control part 440 and instructs to perform a power control.

The operating facility determination part 441 of the power saving control part 440 calculates the operating facility number demanded to satisfy the maximum traffic amount Tmax by referring to the working facility database 450. After that, the power saving control report part 442 reports the operating facility number being calculated, and makes an instruction of the operation control.

Each of the base stations 100 controls the operation or the stop of the network communication card in the operating facility 104, in response to the operating facility number being reported.

Also, the traffic information management part 410 sends the traffic information being collected to the traffic forecasting model update part 423 of the traffic forecasting model management part 420. The traffic forecasting model update part 423 conducts a database update by adding the received traffic information to the traffic forecasting model database 421.

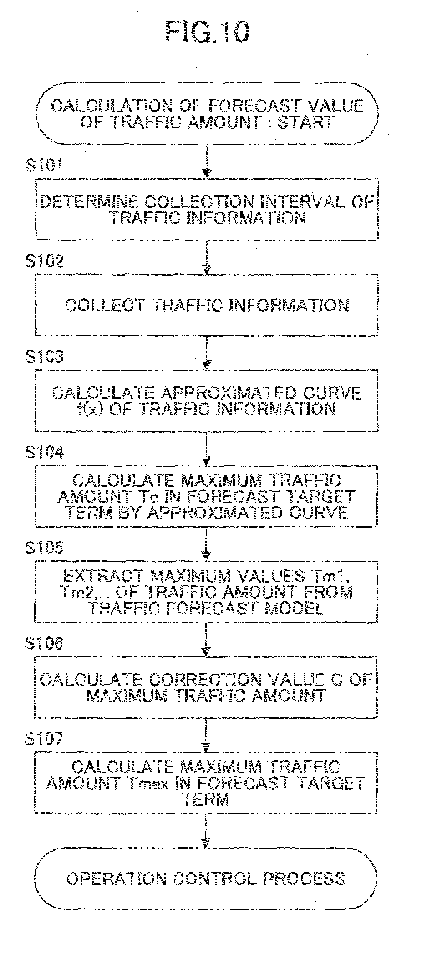

A flow of the above described determination operation of the maximum traffic amount Tmax by the operation control apparatus 400 is summarized in a flowchart in FIG. 10 and will be described below. FIG. 10 is a flowchart illustrating the flow of the determination operation of the maximum traffic amount Tmax for the operation control.

First, the collection interval determination part 412 of the traffic information management part 410 determines the collection interval of the traffic information (step S101). Subsequently, the traffic information collection part 411 reports the traffic information request to the based stations 100 at the collection intervals, and collects the traffic information (step S102).

Based on the collected traffic information, the approximated curve creation part 431 of the traffic information analysis part 430 creates the approximated curve f(x) of the traffic information (step S103). The maximum traffic amount forecasting part 432 calculates the maximum traffic amount Tc which becomes max f(x) in the forecast target term, by the created approximated curve f(x) (step s104).

On the other hand, the traffic forecasting model management part 420 collects the traffic information having the same condition as the forecast target term by the traffic information stored in the traffic forecasting model database 421, and creates the traffic forecasting model. The maximum traffic amount extraction part 422 extracts the maximum traffic amounts Tm1, Tm2, ... for each condition from the created traffic forecasting model (step S105).

The correction value determination part 433 calculates the correction value C for determining the maximum traffic amount Tmax from the maximum traffic amount Tc and the maximum traffic amounts Tm1, Tm2, ... (step S106). The maximum traffic amount determination part 434 determines the maximum traffic amount Tmax by adding the correction value C to the maximum value in the maximum traffic amount Tc and the maximum traffic amounts Tm1, Tm2, ..., and reports to the power saving control part 440 (step S107).

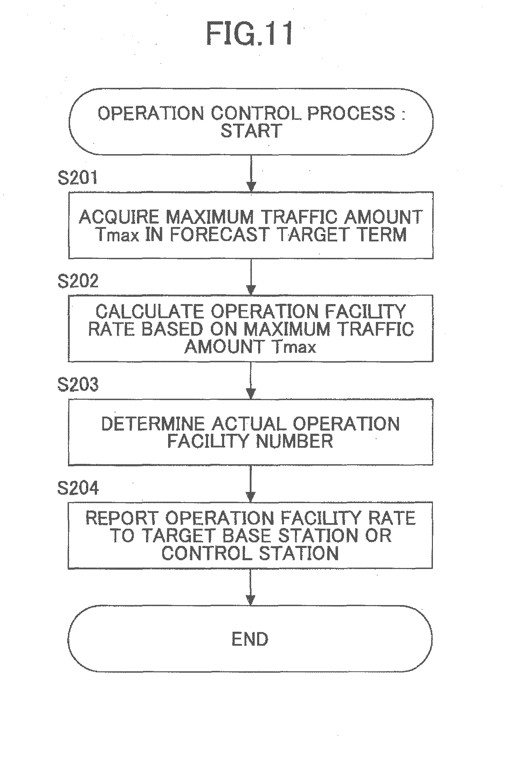

After the above described calculation operation of the forecasted value by the traffic amount of the operation control apparatus 400, the operation control apparatus 400 conducts the operation control of the base station 100 based on the determined maximum traffic amount Tmax, and conducts the operation control of the base stations 100. A flow of an operation of the operation control by the operation control apparatus 400 is summarized in a flowchart in FIG. 11 and will be described below. FIG. 11 is a flowchart illustrating a flow of the process of the operation control.

When receiving a report of the maximum traffic amount Tmax (step S201), the operating facility determination part 441 calculates the operating facility rate for processing the maximum traffic amount Tmax by referring to the working facility database 450 (step S202). The operating facility rate indicates, specifically, a rate of facilities demanded to be operated in the operating facilities included in the base stations 100 or the control station 200 being the target of the operation control by the operation control apparatus 400.

The operating facility determination part 441 determines the operating facility number depending on the determined operating facility rate in the operating facilities being actually operable in the base stations 100 and the like which are the targets of the operation control, by referring to the working facility database 450 (step S203).

After that, the power saving control report part 442 makes an instruction of the operation control by reporting the determined operating facility number to the base stations 100 and the like which are the targets of the operation control (step S204).

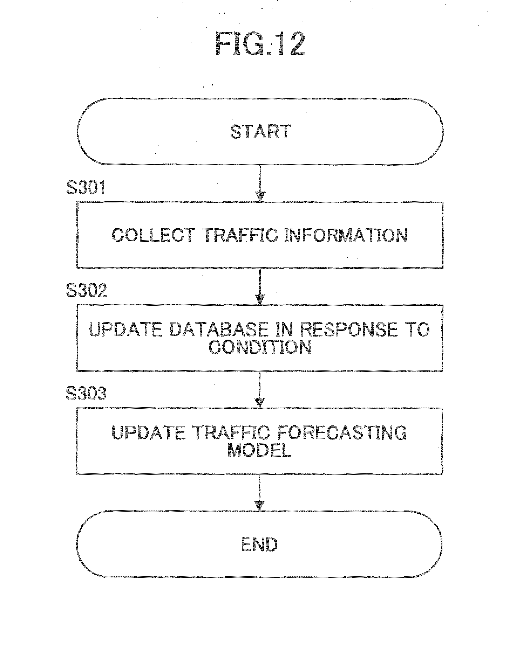

On the other hand, after the above described determination operation of the maximum traffic amount Tmax by the operation control apparatus 400, the traffic forecasting model database 421 is updated based on the collected traffic information. A flow of an update operation of the traffic forecasting model database 421 by the operation control apparatus 400 is summarized in a flowchart in FIG. 12 and will be described below.

The traffic information collection part 411 inputs the traffic information, which is collected (step S301), to the traffic forecasting model update part 423 of the traffic forecasting model management part 420. In this case, the traffic information collection part 411 inputs conditions such as time, weather, a day of the week, and the like when the traffic information is collected at the base stations 100, together with the traffic information.

The traffic forecasting model update part 423 updates the traffic forecasting model database 421 by adding the input traffic information to the traffic forecasting model database 421 for each condition (step S302). The traffic forecasting model database 421 adds the updated traffic information, and newly creates the traffic forecasting model for each condition (step S303).

### (4) Determination Method of Operating Facility Number

A determination method of the operating facility number based on the maximum traffic amount Tmax will be described.

In a determination of the operating facility number, as described above, there are mainly two operations being performed: one operation of calculating the operating facility rate for processing the maximum traffic amount Tmax, and another operation of determining and reporting an actual operating facility number depending on the operating facility rate.

First, the operating facility determination part 441 of the operation control apparatus 400 calculates the operating facility rate for calculating the maximum traffic amount Tmax for each facility conducting the operation control.

In the above described operation for determining the maximum traffic amount Tmax, the call number is applied as an index indicating the traffic amount. In practice, the traffic information to be the collection target may include the simultaneous connection user number and the U-Plane flow amount in addition to the call number. In the base stations 100 or the controls station 200 there may be one or more which include the operating facility 104 for performing a separate process individually for each function. In each of functions of the operating facilities 104 of these base stations 100 or the control station 200, for example, there may be cases of managing traffic using separate information respectively in the traffic information such as the call number, the simultaneous connection user number, the U-Plane flow amount, and the like. Hence, in the determination operation of the maximum traffic amount Tmax, preferably, the traffic information is collected for each function, and the maximum traffic amount Tmax is determined for each function from the collected traffic information. Also, it is preferable that the operating facility rate for each function is determined from the maximum traffic amount Tmax for each function.

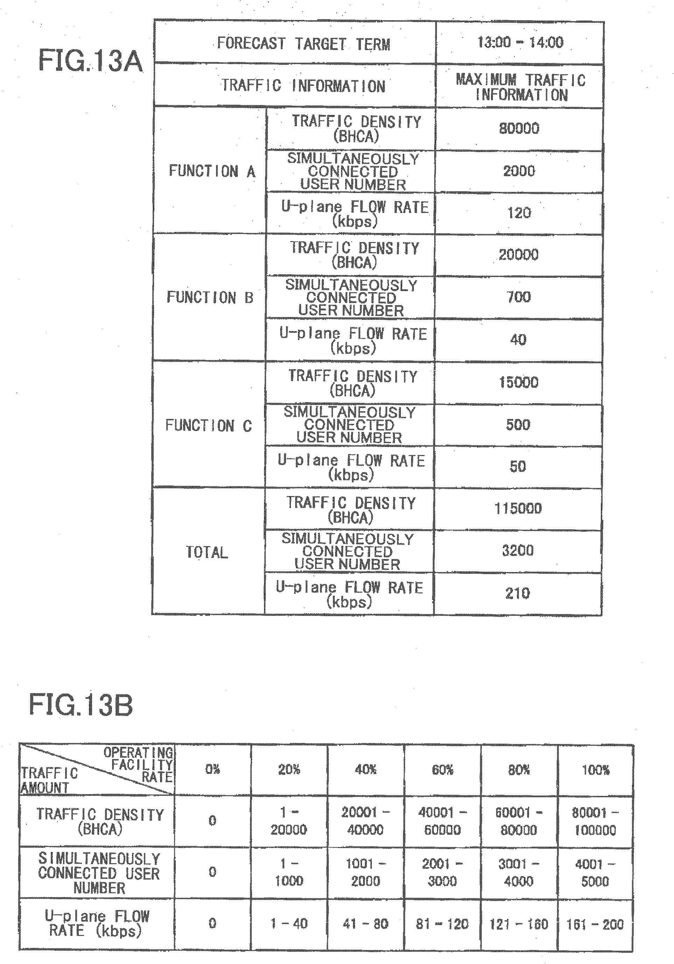

FIG. 13A illustrates an example of of the maximum traffic amount Tmax for each function in a case in which the target of the operation control is one or more of the base stations 100. In a table illustrated in FIG. 13A, as the maximum traffic amount Tmax for determining the operating facility rate at 13:00 - 14:00 being the forecast target term, maximum values of the forecasted values of the call number, the simultaneous connection user number, and the U-plane flow amount are described. The maximum values of the forecasted values of the call number, the simultaneous connection user number, and the U-plane flow amount are separately determined and described for each of a function A, a function B, and a function C which the operating facility 104 of the base station 100 includes.

In a case of the base station 100, for example, the function A, the function B, and the function C correspond to functions of a cell A, a cell B, and a cell C respectively, in multiple cells which the base stations 100 manage. In the base stations 100 of the 3G method and the LTE method, radio resource is individually managed for each of the cell A, the cell B, and the cell C. Thus, by individually forecasting the maximum traffic amount Tmax for each cell and calculating a total, it becomes possible to determine the maximum traffic amount Tmax in the operating facility 104 for each of the base stations 100. In the base stations 100, even in a case in which multiple cells simultaneously cover the same area in a physical relationship, each of the cells, which accommodates the UE 300 present in the area and presents the radio resource, is a single function. Accordingly, it is preferable that the traffic amount is individually handled for each of the functions such as the cells or the like. Also, preferably, the operation control rate is individually calculated.

Moreover, in a case in which the target of the operation control is the control station 200 of the 3G method, for example, the function A, the function B, and the function C correspond to a card A, a card B, and a card C in multiple network communication cards included in the control station 200, respectively. In a case in which a service being processed is different for each card, the traffic amount processed by each card becomes different. Hence, it is preferable that the traffic amount is individually handled and the operation control rate is individually calculated for each card or for each supported service.

In the table illustrated in FIG. 13A, for the function A of the base station 100, the maximum traffic amount Tmax is determined so that the call number is 80000, the simultaneous connection user number is 2000, and the U-Plane flow amount is 120 kbps. For the function B of the base station 100, the maximum traffic amount Tmax is determined so that the call number is 20000, the simultaneous connection user number is 700, and the U-Plane flow amount is 40 kbps. For the function C of the base station 100, the maximum traffic amount Tmax is determined so that the call number is 15000, the simultaneous connection user number is 500, and the U-Plane flow amount is 50 kbps.

As described above, by calculating a total of the maximum traffic amounts Tmax respective to individual functions, for the entire operating facility 104 of the base station 100, the maximum traffic amount Tmax is determined so that the call number is 115000, the simultaneous connection user number is 3200, the U-Plane flow amount is 210 kbps.

The operating facility determination part 441 of the operation control apparatus 400 determines the operating facility rate for the operation control with respect to the base station 100 based on the maximum traffic amount Tmax in the entire operating facility 104 of the base station 100. For example, the operating facility determination part 441 determines the operating facility rate depending on the maximum traffic amount Tmax by referring to data indicating a relationship between the traffic amount being set beforehand and the operating facility rate for processing the traffic amount. For example, the data are stored in the working facility database 450 in a tabular form illustrated in FIG. 13B.

As illustrated in FIG. 13B, the operating facility rate is sufficiently set for processing the traffic amount for each of the call number, the simultaneous connection user number, the U-Plane flow amount. In the example in FIG. 13B, for the call number as an example of the traffic amount, the operating facility rate is 0 % if 0, 20 % if 1 to 20000, 40 % if 20001 to 40000, 60% if 40001 to 60000, 80% if 60001 to 80000, and 100% if 80001 to 100000. Also, for the simultaneous connection user number, the operating facility rate is 0 % if 0, 20 % if 1 to 1000, 40 % if 1001 to 2000, 60% if 2001 to 3000, 80% if 3001 to 4000, and 100% if 4001 to 5000. Also, for the U-Plane flow amount, the operating facility rate is 0 % if 0 kbps, 20 % if 1 kbps to 40 kbps, 40 % if 41 kbps to 80 kbps, 60 % if 81 kbps to 120 kbps, 80 % if 121 kbps to 160 kbps, and 100% if 161 kbps to 200 kbps.

In a case in which the operating facility determination part 441 calculates the operating facility rate by focusing on the function A which the operating facility 104 of the base station 100 includes, the maximum traffic amount Tmax is determined so that the call number indicates 80000, the simultaneous connection user number indicates 2000, and the U-Plane slow amount is 120 kbps. Referring to FIG. 13B, in a case in which the call number is focused on for the function A which the operating facility 104 is included, the operating facility rate is 80 %. In a case in which the simultaneous connection user number is focused on, the operating facility rate is 40 %, and in a case in which the U-Plane flow amount is focused on, the operating facility rate is 60 %. As described above, as a feature of the operations of the node apparatuses such as the base station 100, the control station 200, and the like, it is demanded that a facility capable of sufficiently processing the traffic amount, which may be created, is operated. Therefore, the operating facility determination part 441 determines, as the operating facility rate for the function A which the operating facility 104 includes, 80 % which is the largest rate of the above described three operating facility rates.

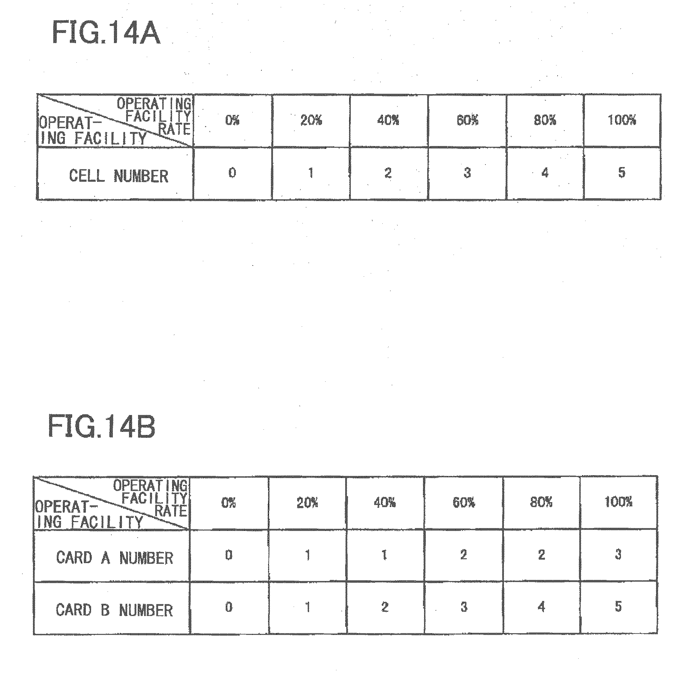

The operating facility determination part 441 determines an actual operation number of the operating facilities in the operating facility 104 of the base station 100, in response to the operating facility rate determined as described above. For example, the operating facility determination part 441 determines the operating facility number corresponding to the operating facility rate by referring to data indicating a number of the operating facilities respective to the operating facility rate in which the data are set beforehand. For example, the data are stored in the working facility database 450 in a tabular form illustrated in FIG. 14A and FIG. 14B.

FIG. 14A is a table illustrating a relationship between the operating facility rate and an operation number of cells as an example of the operating facility in a case of the base station 100. In an example in FIG. 14A, a cell number is set to be 0 when the operating facility rate is 0 %, to be 1 when the operating facility rate is 20 %, to be 2 when the operating facility rate is 40 %, to be 3 when the operating facility rate is 60 %, to be 4 when the operating facility rate is 80 %, and to be 5 when the operating facility rate is 100 %.

FIG. 14B is a table illustrating a relationship between the operating facility rate and the operation number of the network communication cards as an example of the operating facility in a case of the control station 200. In an example in FIG. 14B, the operation number of the card A corresponding to the function A is set to be 0 when the operating facility rate is 0 %, to be 1 when the operating facility rate is 20 % or 40 %, to be 2 when the operating facility rate is 60 % or 80 %, and to be 3 when the operating facility rate is 100 %. Also, the operation number of the card B corresponding to another function B is set to be 0 when the operating facility rate is 0 %, to be 1 when the operating facility rate is 20 %, to be 2 when the operating facility rate is 40 %, to be 3 when the operating facility rate is 60 %, to be 4 when the operating facility rate is 80 %, and to be 5 when the operating facility rate is 100 %.

The tables illustrated in FIG. 14A and FIG. 14B are examples for an explanation. Thus, if the data may be used to determine the number of the operating facilities to be actually operated based on the operating facility rate, any data may be used. Also, a scheme for calculating the operating facility number from the operating facility rate may be applied by some kinds or other means.

The power saving control report part 442 of the power saving control part 440 makes the instruction of the operation control by reporting the calculated operating facility number to each of the base stations 100 or the control station 200.

A message for the instruction of the operation control includes the operating facility number calculated as described above, and a term in which the operating facility number is applied, that is, the forecast target term which is set when the maximum traffic amount is calculated.

The power saving control part 114 of the base station 100 which receives the instruction of the operation control causes the operating facility 104 to operate facilities corresponding to the calculated operating facility number, and to stop the operations of other facilities and power supply to other facilities in a reported term.

As described above, according to the operation of the operation control apparatus 400, in the base stations 100 or the control station 200 being the target of the operation control, sufficient operating facilities are operated in order to process the determined maximum traffic amount Tmax. On the other hand, it is possible to stop operations of remaining facilities. The maximum traffic amount Tmax is determined from the approximated curve f(x) estimated from the transition of the traffic amount before the forecast target term and the traffic forecasting model created based on the forecast target term and a previous traffic amount having the same conditions such as the weather, the day of the week, and the like. The maximum traffic amount Tmax is determined as a value in which a margin is further added with respect to the largest value of the maximum traffic amount Tc acquired from the approximated curve f(x) and the maximum traffic amount Tm extracted from the traffic forecasting model. Accordingly, in the forecast target term, for the base stations 100 or the control station 200 being the target of the operation control, it is possible to preferably suppress an increase of the traffic amount exceeding the maximum traffic amount Tmax.

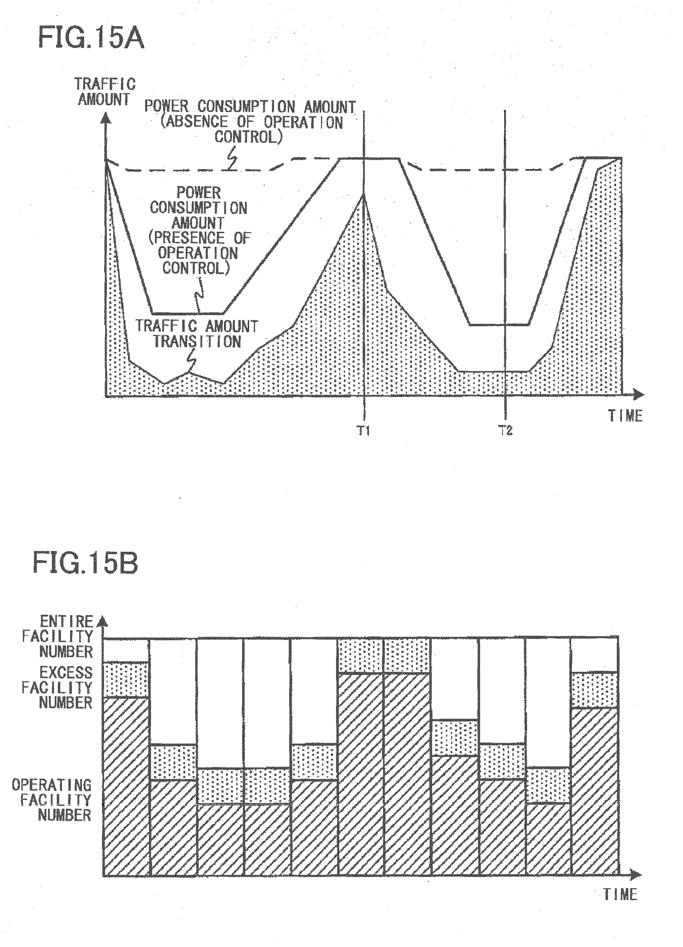

FIG. 15A and FIG. 15B illustrate aspects of the power saving by the operation control apparatus 400. FIG. 15A is a graph illustrating the transition of the traffic amount and the transition of the power consumption in the base stations 100 or the control station 200.

In a case in which the operation control is not performed by the operation control apparatus 400, the transition (dashed line portion) of the power consumption amount does not greatly change depending on a large or small traffic amount. In a case in which the traffic amount is relatively lower, the operating facility which does not perform a traffic process is in a similar state in which the operating facility is performing the traffic process.

On the other hand, in the transition (solid line portion) of the power consumption amount in a case in which the operation control apparatus 400 performs the operation control, with decrease of the traffic amount, since the operation of the operating facility is stopped, the power consumption amount is greatly decreased. Moreover, in a case in which the traffic amount is increased, since a control is performed to increase the number of facilities to operate depending on the increase of the forecasted traffic amount, the power consumption amount is decreased. FIG. 15B illustrates an aspect of the operating facility number in the base stations 100 or the control station 200 in a case in which the operation control is performed by the operation control apparatus 400. An unpatterned portion indicates the number of the entire operable facilities which the base stations 100 or the control station 200 includes. An oblique line portion indicates the number of operating facilities performing the traffic process. A stippled portion indicates the number of facilities which are to be operated exceeding the operating facility number which is demanded by the traffic process, and which are in an non-operation related to the traffic process but operate to be able to process depending on the increase of traffic. As described above, since the maximum traffic amount Tmax is determined as a value in which the margin is added to the maximum value of the forecasted traffic amount, even in a case in that the traffic amount is increased more than the forecasted traffic amount, it is possible to perform the traffic process by excess facilities illustrated by the stippled portion.

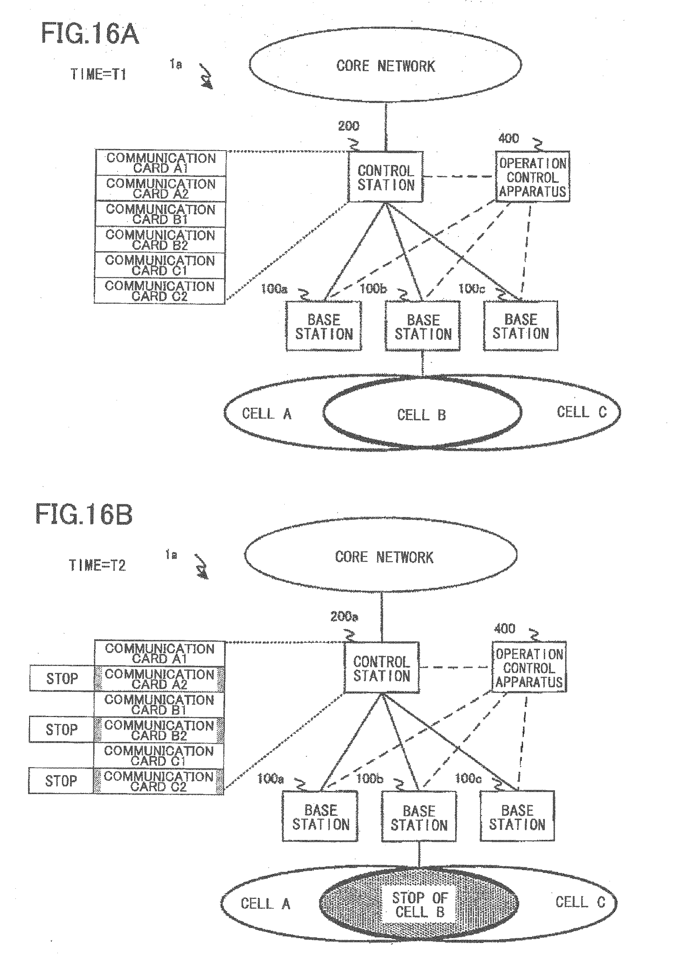

A specific action of the operation control in the base stations 100 or the control station 200 will be described with reference to FIG. 16A and FIG. 16B. As illustrated in FIG. 16A and FIG. 16B, in the mobile communication system 1a of the 3G method, the operation control apparatus 400 is connected to each of the base stations 100a through 100c and the control station 200, and the operation control is performed. The base stations 100a through 100c include the cells A through C as the operating facilities 104, respectively. The control station 200 includes, as the operating facilities 104, communication cards A1, A2, B1, B2, C1, and C2 for processing the function A through C being different from each other.

FIG. 16A illustrates an aspect of operations of the operating facilities in the base stations 100 and the control station 200 at time indicated by time T1 in FIG. 15A in which the traffic amount is relatively greater in the mobile communication system 1a. Since the traffic amount is relatively greater at a point of the time T1, the base stations 100a through 100c and the control station 200 operate all operating facilities 104. Specifically, the base stations 100a through 100c operate the cell A through C, respectively. The control station 200 operates the communication cards A1, A2, B1, B2, C1, and C2.

FIG. 16B illustrates an aspect of the operations of the operating facilities in the base stations 100 and the control station 200 at time indicated by time T2 in FIG. 15A in which the traffic amount is relatively small. Since the traffic amount is relatively small at a point of the time T2, the base stations 100a through 100c and the control station 200 operate portions of the operating facilities 104, and stop other portions. Specifically, the base stations 100a and 100c operate the cells A and C, respectively. On the other hand, the base station 100b stops operating the cell B. The control station 200 operates the functions A through C, and the communication cards A1, B1, and C1. On the other hand, the control station 200 stops the operations of the functions A2, B2, and C2.

As describe above, according to the operation control by the operation control apparatus 400, it is possible to preferably reduce the power consumption due to the operations of the operating facilities 104 which the base stations 100 or the control station 200 includes. It is possible to realize the power saving as a whole in the base stations 100 or the control station 200. This is beneficial in light of reducing operation expenses, a volume of carbon dioxide emissions with the power savings.

The above example describes a case in which the instruction of the operation control is realized by reporting the operating facility number for the operation control apparatus 400 to process the maximum traffic amount Tmax, to the base stations 100 or the control station 200. However, the operation control apparatus 400 may make the instruction of the operation control by reporting the maximum traffic amount Tmax to the base stations 100 or the control station 200. In this case, for example, it is preferable that the base stations 100 or the control station 200 include data indicating the operating facility number depending of the maximum traffic amount Tmax in the memory 102, and performs the operation control of the operating facility 104 by referring to the data. In a case of this configuration, it is possible to reduce a process amount in the operation control apparatus 400, and to realize the above described operation control a smaller scale configuration.

### (5) Correspondence Method for Sudden Increase of Traffic Amount

By the above described control of the operation control apparatus 400, in a state in which the operating facilities 104 of the base stations 100 or the control station 200 are partially stopped, there is a case in which the traffic amount increases in the base stations 100 or the control station 200 for any reason. In this case, when the traffic amount increases more than a predicted amount, the traffic amount may exceed a traffic amount possible to be processed by the facilities which are operating. However, it is preferable for the base stations 100 or the control station 200 to correspond to an increase of the traffic amount more than the predicted amount, due to the feature thereof. In the following, a process, in a case in which the traffic amount exceeds a throughput capability of the facilities which are operating, will be described.

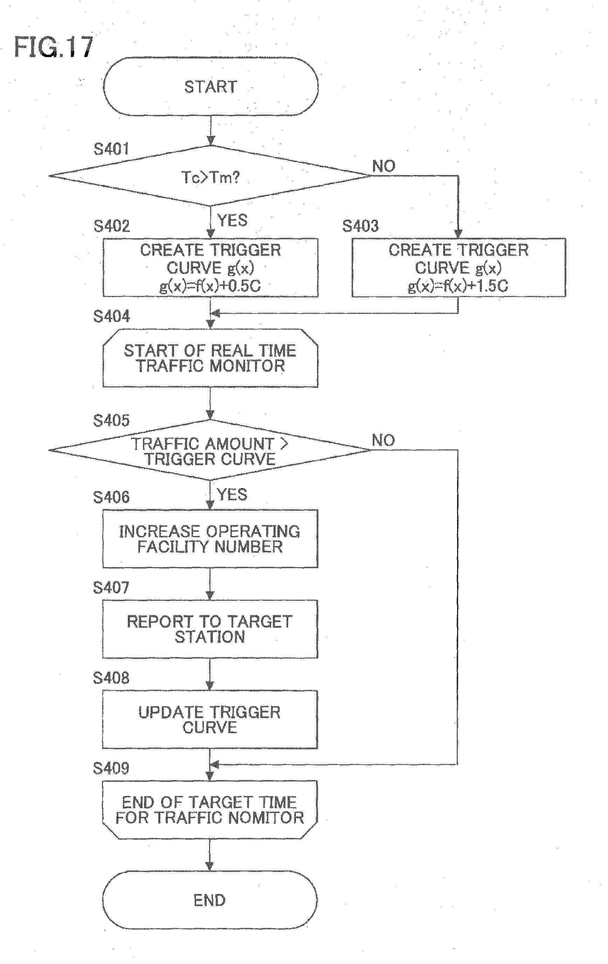

In an example described below, when the traffic amount increases with exceeding the throughput capability of the facilities which are operating while a part of the operating facilities is stopped, the traffic amount, which is a trigger for starting the operation of the facilities being stopped, is determined. FIG. 17 is a flowchart illustrating a flow of a series of the operation in the above described example.

The operation control apparatus 400 compares the maximum traffic amount Tc determined based on the collected traffic information with the maximum traffic amount Tm determined from the traffic forecasting model (step S401). In this case, if there are multiple traffic forecasting models, the largest amount of the multiple traffic amounts Tm1, Tm2, ... which are determined based on the multiple traffic forecasting models is set as the maximum traffic amount Tm.

When the maximum traffic amount Tc is more than the maximum traffic amount Tm (step S401: YES), the operation control apparatus 400 creates g(x) in which 0.5 times the correction value C is added to the approximated curve f(x) calculated based on the collected traffic information, as a trigger curve (step S402).

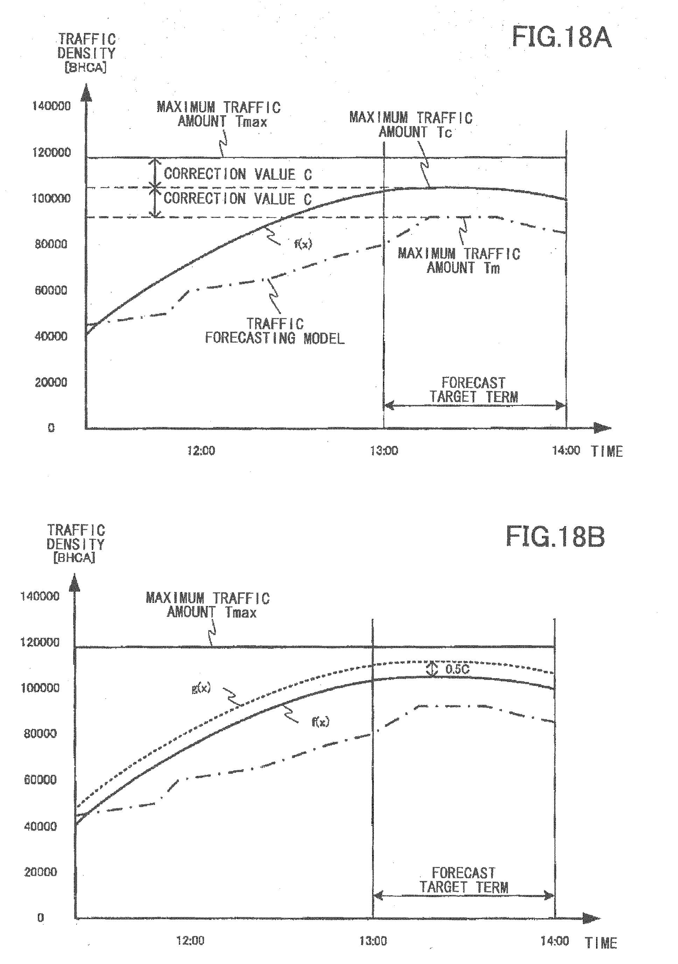

FIG. 18A and FIG. 18B illustrate graphs pertinent to a creation of a trigger curve g(x). As illustrated in FIG. 18A, when the maximum traffic amount Tc is greater than the maximum traffic amount Tm, the maximum traffic amount Tmax becomes a value in which the correction value C=Tc-Tm is added to the maximum traffic amount Tc. As illustrated in FIG. 18B, the operation control apparatus 400 creates the trigger curve g(x)=f(x)+0.5C in which 0.5 times the correction value C is added to the approximated curve f(x).

On the other hand, when the maximum traffic amount Tc is less than or equal to the maximum traffic amount Tm (step S401: NO), the operation control apparatus 400 creates g(x)=f(x)+1.5C in which 1.5 times the correction value C is added to the approximated curve f(x) calculated based on the collected traffic information, as the trigger curve (step S403).

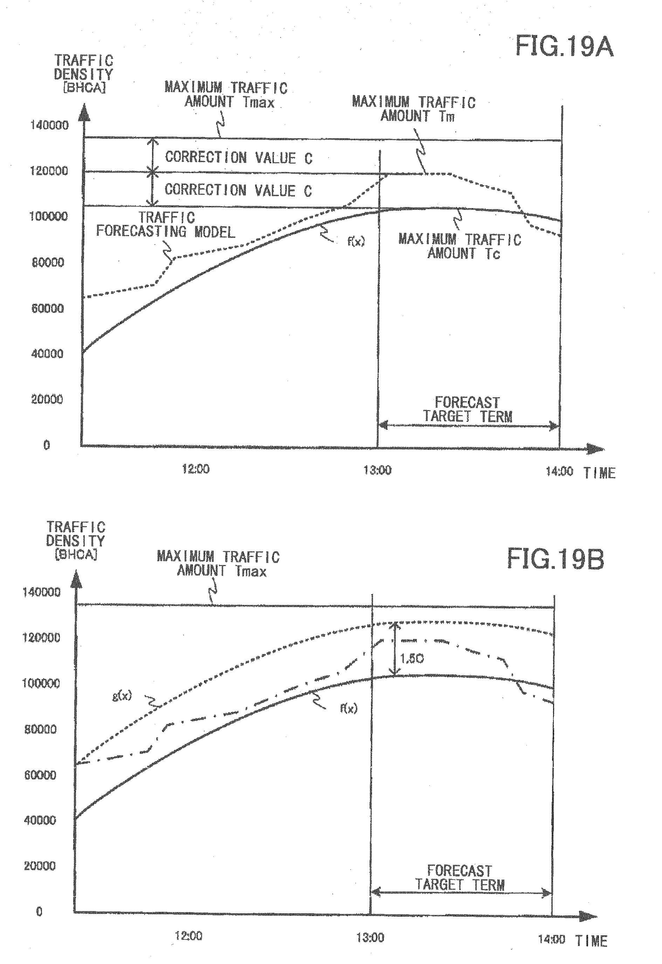

FIG. 19A and FIG. 19B illustrate graphs pertinent to the creation of the trigger curve g(x). As illustrated in FIG. 19A, when the maximum traffic amount Tc is less than or equal to the maximum traffic amount Tm, the maximum traffic amount Tmax becomes a value in which the correction value C=Tm-Tc to the maximum traffic amount Tm. As illustrated in FIG. 19B, the operation control apparatus 400 creates the trigger curve g(x) in which 1.5 times the correction value C is added to the approximated curve f(x).

After creating the trigger curve g(x), the operation control apparatus 400 makes the instruction of the operation control, and also monitors the traffic amount in the base stations 100 or the control station 200 being the target of the operation control at real time in the forecast target term (step S404).

When the traffic amount in the base stations 100 or the control station 200 is greater than the trigger curve g(x) (step S405: YES), the operation control apparatus 400 re-calculates the instruction of the increase of the operating facility number in the base stations 100 or the control station 200 (step S406). The operation control apparatus 400 makes the instruction of the operation control by reporting the calculated operating facility number to the base stations 100 or the control station 200 being the target (step S407). Furthermore, the operation control apparatus 400 conducts an update of modifying the trigger curve g(x) depending on the detected traffic amount (step S408). For example, the operation control apparatus 400 creates g'(x)=g(x)+0.5C in which 0.5 times the correction value C is added to the trigger g(x), as a new trigger curve.

After updating the trigger curve g(x) (step S408), or when the traffic amount is less than or equal to the trigger curve g(x) (step S405: NO), the operation control apparatus 400 continuously monitors the traffic amount at real time, for example, until an end of the forecast target term (step S409).

According to the above described operations, in the base stations 100 or the control station 200 being the control target, the operating facility number is re-calculated when the traffic amount becomes greater than a threshold defined by the trigger curve g(x). It is possible for the operation control apparatus 400 to make the instruction for increasing the operating facility number by reporting the operating facility number, which is calculated depending on the increased traffic amount, to one of the base stations 100 or the control station 200 which detects the increase of the traffic amount. Accordingly, in the base stations 100 or the control station 200, it is possible to operate the facilities depending on the increase of the traffic amount, and possible to realize the process following the traffic amount. On the other hand, when the traffic amount does not exceed the threshold defined by the trigger curve g(x), it is possible for the base stations 100 or the control station 200 to realize the operations by the operating facility number set as described above, and to save the power consumption of a device operation.

The present invention is not limited to the above described embodiment, and can be suitably changed in the range which is not contrary to the summary or thought of invention which can be read in the claims and the whole description, and the control apparatus, the control method, and the node apparatus accompanied by such change is also contained in the technical scope of the present invention.

## Claims

1. A control apparatus for controlling an operation state of functions which are included in a node apparatus connected to a network, the control apparatus **characterized by**:
a forecasting part which forecasts a maximum traffic amount in a target term in the node apparatus; and
a control part which controls the operation state of the node apparatus to stop functions, other than a function which is demanded to process the maximum traffic amount, in the target term.

2. The control apparatus as claimed in claim 1, further **characterized by**:
a first calculation part which calculates a first forecasted value of a traffic amount in the target term based on a measured value of the traffic amount in a first predetermined term in the node apparatus; and
a second calculation part which calculates a second forecasted value of the traffic amount in the target term based on the measured value of the traffic amount in a second predetermined term which is different from the first predetermined term in the node apparatus,
wherein the forecasting part forecasts the maximum traffic amount in the target term in the node apparatus based on the first forecasted value and the second forecasted value of the traffic amount.

3. The control apparatus as claimed in claim 2, further **characterized by**:
a storage part which stores the forecasted value of the traffic amount being collected;
wherein the second calculation part calculates the second forecasted value based on the measured value of the traffic amount of the second predetermined term which is collected under a condition similar to the target term and stored in the storage part.

4. The control apparatus as claimed in claim 3, **characterized in that** the second calculation part creates a forecasting model of the traffic amount in the target term based on the measured value of the traffic amount in the second predetermined term which is collected under the condition similar to the target term and is stored in the storage part, and calculates the second forecasted value from the forecasting model.

5. The control apparatus as claimed in claim 2, **characterized in that** the first forecasted value is a maximum value of the traffic amount of the target term, in which the maximum value is forecasted based on the measured value of the traffic amount in the first predetermined term.

6. The control apparatus as claimed in claim 2, **characterized in that** the second forecasted value is a maximum value of the traffic amount in the target term, in which the maximum value is forecasted based on the measured value of the traffic amount in the second predetermined term.

7. The control apparatus as claimed in claim 1, **characterized in that** the control part controls an operation state of the node apparatus by reporting a function demanded to process the maximum traffic amount to the node apparatus.

8. A control method performed in a control apparatus to control an operation state of functions which are included in a node apparatus connected to a network, the method **characterized by**:
a forecasting step which forecasts a maximum traffic amount in a target term in the node apparatus; and
a controlling step which controls the operation state of the node apparatus to stop functions, other than a function which is demanded to process the maximum traffic amount, in the target term.

9. A node apparatus connected to a network, the node apparatus **characterized by**:
a forecasting part which forecasts a maximum traffic amount in a target term in the node apparatus; and
a controlling part which controls the operation state of the node apparatus to stop functions, other than a function which is demanded to process the maximum traffic amount, in the target term.
